Europäisches Patentamt

European Patent Office

Office européen des brevets

(11) Publication number: **0 561 360 A1**

## EUROPEAN PATENT APPLICATION

(21) Application number: **93104288.1**

(22) Date of filing: **16.03.93**

(51) Int. Cl.5: **C08F 210/14**, C08F 4/655

(30) Priority: **16.03.92 US 853234**

(43) Date of publication of application:
**22.09.93 Bulletin 93/38**

(84) Designated Contracting States:
**AT BE ES FR IT NL SE**

(71) Applicant: **PHILLIPS PETROLEUM COMPANY
5th and Keeler
Bartlesville Oklahoma 74004(US)**

(72) Inventor: **Sutherlin, Dirk Morton
1337 SE Harned
Bartlesville, OK 74006(US)**

(74) Representative: **Dost, Wolfgang,
Dr.rer.nat.,Dipl.-Chem. et al
Patent- & Rechtsanwälte Bardehle .
Pagenberg . Dost . Altenburg . Frohwitter .
Geissler & Partner, Postfach 86 06 20
D-81633 München (DE)**

(54) **Polymerization process to prepare a polyolefin from sterically hindered, methyl branched, alpha-olefins.**

(57) A process comprising contacting under polymerization conditions: at least one trialkylaluminum cocatalyst; at least one alpha-olefin which has a methyl branch at the 3-position and which has at least five carbon atoms and at least one comonomer; with a catalyst prepared by the process comprising comminuting, at least one aluminum halide, at least one electron donor, at least one metal compound wherein the metal is selected from the group consisting of chromium, hafnium, molybdenum, niobium, tantalum, titanium, tungsten, vanadium, zirconium, and mixtures thereof, a salt compound wherein at least one component of said salt compound is selected from the group consisting of barium, beryllium, calcium, magnesium, strontium, zinc, and mixtures thereof, to produce a comminuted solid then subjecting said comminuted solid to a double activation-extraction step; to produce a copolymer at a productivity level of at least 700 grams of copolymer per gram of catalyst utilized.

Rank Xerox (UK) Business Services
(3.10/3.6/3.3.1)

## BACKGROUND OF THE INVENTION

This invention relates to polymerizing alpha-olefins which have a methyl branch at the 3-position.

Thousands of processes are known for polymerizing linear and branched alpha-olefins. Branched alpha-olefins tend to be harder to polymerize than linear alpha-olefins. This is due, in part, to the steric hindrances to the polymerization process. It is generally accepted that as the branching substituent is positioned nearer to the double bond, the ability to polymerize the branched alpha-olefin correspondingly decreases. However, these branched alpha-olefins upon polymerization yield polymers which tend to have higher melting points and better chemical resistance than their linear cousins while retaining good electrical properties.

An example of a polymerizable branched alpha-olefin is 3-methyl-1-butene. Various processes in the art have produced poly(3-methyl-1-butene) in characteristically low yields. This is due to the steric hindrance imposed by the branched methyl group of the monomer which inhibits polymerization. It has long been recognized that long residence times and high polymerization temperatures were necessary in order to overcome this steric hindrance effect. Typically, polymerization of 3-methyl-1-butene has been reported as anywhere from about 2 grams of polymer produced per gram of catalyst, to about 400 grams of polymer produced per gram of catalyst. Therefore, a process which produced poly(3-methyl-1-butene) in better yields would make the commercial production of poly(3-methyl-1-butene) more economical. Furthermore, a process which polymerized these sterically hindered, methyl branched at the 3-position, alpha-olefins would be of great scientific and economic value. Additionally, it would be of great value if a sterically hindered, methyl branched at the 3-position, alpha-olefin could be produced at a high productivity rate and with as high of a molcular weight as possible.

## SUMMARY OF THE INVENTION

It is an object of this invention to provide a high productivity process to produce a high molecular weight copolymer of an alpha olefin having a methyl branch at the 3 position.

It is an object of this invention to provide an improved copolymerization process for preparing a polyolefin from a sterically hindered, methyl branched at the 3-position, alpha-olefin and at least one comonomer.

It is another object of this invention to provide an improved copolymerization process for 3-methyl-1-butene and at least one comonomer.

It is still another object of this invention to provide an improved copolymerization process for 3-methyl-pentene and at least one comonomer.

In accordance with this invention a process is provided comprising

contacting under polymerization conditions: at least one trialkylaluminum cocatalyst; at least one alpha-olefin which has a methyl branch at the 3-position and which has at least five carbon atoms, and at least one comonomer;

with a catalyst prepared by the process comprising comminuting at least one aluminum halide; at least one electron donor; at least one metal compound wherein the metal is selected from the group consisting of chromium, hafnium, molybdenum, niobium, tantalum, titanium, tungsten, vanadium, zirconium, and mixtures thereof; and a salt compound wherein at least one component of said salt compound is selected from the group consisting of barium, beryllium, calcium, magnesium, strontium, zinc, and mixtures thereof, to produce a comminuted solid then subjecting said comminuted solid to a double activation-extraction step;

to produce a copolymer at a productivity level of at least 700 grams of copolymer per gram of catalyst utilized.

## DETAILED DESCRIPTION OF THE INVENTION CATALYST SYSTEM

### Aluminum Halide Component

The term aluminum halide is used to refer to aluminum compounds having at least one halogen bonded directly to the aluminum. Included are aluminum halide compounds of the formula:

$$R_y AlX_z$$

wherein R is an alkyl, aryl, or cycloalkyl group; X is fluorine, chlorine, bromine, or iodine; z is 1, 2, or 3 and z + y = 3.

Examples include:

AlCl$_3$;

Al-dichloro-phenoxy;

Al-mono-chloro-diphenoxy;

Al-dichloro-xylenoxy;

Al-mono-chloro-dixylenoxy;

Al-dichloro-2,6-t-butyl-p-cresoxy;

Al-dichloro-octoxy; and

Al-monoethyl-dichloride.

Presently the most preferred is AlCl$_3$.

Electron Donor Component

Examples of electron donors include organic compounds having at least one atom of oxygen, sulfur, nitrogen, or phosphorus which can function as the electron donor. More specifically, the term electron donor is used to include ethers, esters, ketones, aldehydes, alcohols, carboxylic acids, phenols, thioethers, thioesters, thioketones, amines, amides, nitriles, isocyanates, phosphites, phosphoryl compounds, and phosphines. Typically it is preferred to use compounds having no more than 16 carbon atoms per molecule. It is currently believed that aromatic ethers and the esters of aromatic acids are the most useful electron donors.

In an especially preferred embodiment both an aromatic ester and an aromatic ether are employed. The more common esters are those derived from carboxylic acids having 1 to 12 carbon atoms and alcohols having 1 to 12 carbon atoms. The more common ethers are those containing 2 to 12 carbon atoms and 1 to 10 ether oxygen atoms. Typical examples of the aromatic esters include the alkyl and aryl esters of aromatic carboxylic acids such as benzoic, toluic, p-methoxybenzoic, and phthalic acid. Some specific examples include ethyl benzoate, methyl benzoate, methyl p-toluate, ethyl p-toluate, and methyl anisate. The term aromatic ethers is intended to include those ethers having two aromatic groups as well as those having one aromatic group and one alkyl group. Some specific examples include methoxybenzene, phenetole, diphenyl ether, phenylallyl ether, and benzofuran. The currently most preferred combination is ethyl benzoate and methoxybenzene.

Metal Compound Component

The metal compound component includes tri, tetra, and pentavalent metal compounds. Examples include compounds of the formula $MO_p(OR)_m$-$X_{(n-2p-m)}$ wherein M is a metal selected from the group consisting of chromium, hafnium, molybdenum, niobium, tantalum, titanium, tungsten, vanadium and zirconium, with a valency of n = 3, 4, or 5, O is oxygen, p is 0 or 1, R is an alkyl, aryl, cycloalkyl group or substituted derivative thereof, X is a halide and n≥m≥0. In practice the metal is generally selected from the group consisting of chromium, titanium, vanadium, and zirconium. In a preferred embodiment, the metal is titanium. The choice of a particular metal compound within the above formula will depend upon the reaction conditions and other constituents present in the catalyst. Some examples of metal compounds having polymerization activity are TiCl$_4$, Ti(OCH$_3$)Cl$_3$, Ti(OCH$_2$CH$_3$)Cl$_3$, VCl$_3$, VOCl$_2$, VOCl$_3$ and VO(OCH$_3$)Cl$_2$. In a preferred embodiment liquid titanium tetrachloride is used as the metal compound.

Salt Component

Included within the scope of salts referred to above are the halogen containing compounds of barium, beryllium, calcium, magnesium, strontium, and zinc. Specific examples of such compounds include magnesium chloride, magnesium bromide, calcium chloride, zinc chloride and magnesium hydroxychloride. It is currently believed that the best salt components are the salts of magnesium. Typical examples of such salts include magnesium dihalides, alkyloxides, aryloxides, and combinations thereof. The preferred salt components are $M(OR)_nX_{(2-n)}$ where M is magnesium, R is an alkyl or aryl radical, X is a halide and n is 0, 1, or 2. Some typical examples of salts having such a formula are MgCl$_2$, MgBr$_2$, MgF$_2$, Mg(OCH$_3$)$_2$, Mg-(OCH$_2$CH$_3$)$_2$, Mg(OC$_6$H$_5$)$_2$. It is within the scope of the invention to employ mixtures of such salts. The currently most preferred embodiment employs magnesium halides, especially magnesium chloride. The molar proportions of the components are illustrated by the table below.

| Table of the molar proportions of the catalyst components based on one mole of metal compound component | | | |
|---|---|---|---|
| Component | Broad Range | Preferred Range | Most Preferred |
| Salt Compound | 8≧S.C.≧80 | 10≧S.C.≧80 | 14≧S.C.≧16 |
| Aluminum Halide Compound | 1≧AHC≧5 | 1.25≧AHC≧3.0 | 1.5≧AHC≧2.5 |
| Electron Donor Compound | 1≧EDC≧10 | 1.5≧EDC≧8 | 2≧EDC≧7 |

An example of a preferred catalyst and the molar proportions of its components is:

(1) 1 mole of $TiCl_4$ (metal compound component)

(2) 15 moles of $MgCl_2$ (salt compound component)

(3) 2 moles of $AlCl_3$ (aluminum halide component)

(4) 3 moles of $C_6H_5CO_2C_2H_5$ and

2 moles of $C_6H_5OCH_3$; for a total of 5 moles of (electron donor compound components)

Preparation of the Catalyst

The term comminuting is used herein to refer to grinding or pulverization of the components. This term is used to distinguish over simple mixing which does not result in any substantial alteration of the particle size of the components of the catalyst. One method to attain such comminuting is by using a ball, pebble, or rod mill. Basically, these mills are used for the size reduction of materials prior to processing. They are generally made up of a rotating drum which operates on a horizontal axis and which is filled partially with a free-moving grinding medium which is harder and tougher than the material to be ground. The tumbling action of the grinding medium (balls, pebbles, or rods) crushes and grinds the material by a combination of attrition and impact. Grinding generally requires several hours to assure the necessary fineness within particle size limits.

A method of producing the above catalyst system comprises the comminution of the components preferably under an inert atmosphere in a ball or vibration type mill. The salt component is initially charged into the mill. If the salt component contains water which must be removed, a sufficient quantity of dehydrating agent is initially added to the salt component and the resulting mixture is comminuted at temperatures between about 0°C and about 90°C for about 15 minutes to about 48 hours. Preferably this comminuting is from about 6 hours to about 24 hours, optimally for about 15 hours, at temperatures between 35°C and about 50°C so that the salt component becomes substantially anhydrous. It is preferred that the catalyst components be substantially anhydrous because the catalyst system is susceptible to water and air degradation. It is important that the water content of the catalyst be sufficiently low so as not to substantially interfere with the catalytic activity. Usually it is only the salt component which carries a possibility of a significant amount of water within its composition. Therefore, drying the salt component prior to use is generally preferred. Further examples of various methods to dehydrate the components of the catalyst are disclosed in U.S. patent 4,680,351 which is hereby incorporated by reference.

Although comminution may take place at temperatures between about 0°C and 90°C the preferred comminuting temperature is from about 20°C to about 40°C with a range of 30°C to 34°C being most preferred. Comminution time varies but may range from about 15 minutes to about 48 hours. Preferred comminution times are from about 12 hours to about 20 hours and most preferably are from about 14 hours to about 18 hours. Insufficient comminution will not yield a homogeneous composition, while over comminuting may cause agglomerization or may significantly decrease particle size of the catalyst composition causing a possible reduction in the particle size of the polymers produced from the catalyst system. The comminution of the components can be carried out in any order. The components can be added one at a time with additional comminution with each newly added component or several of the components can be combined first and comminuted simultaneously. It is also possible to combine some of the components before combining with a comminuted product. Currently the most preferred technique involves comminuting the salt component and the aluminum halide component, then comminuting that product with one or more electron donors and then comminuting that product with the metal compound component. Further examples of various methods to comminute the components are disclosed in U.S. Patent 4,680,351.

The solid obtained as described above is then contacted with a liquid under conditions sufficient to extract aluminum from the solid and to further increase the activity of the catalyst. The amount of the extraction/activation liquid employed can vary but, typically, it would be employed in such an amount that the resulting slurry would contain about 10 to about 40 weight percent solids based on the total weight of the liquid and solids, more preferably about 20 to about 30 weight percent solids. The actual temperature and time for the extraction/activation can vary depending on the results desired. Typically the extraction/activation would be conducted at a temperature in the range of about 40°C to about 120°C. Generally, however, the temperature should be kept below the boiling point of the liquid having the lowest boiling point. It is currently preferred to use a temperature in the range of about 60°C to about 110°C, more preferably 85°C to about 105°C. It is currently preferred to contact the catalyst with the liquid for about 0.5 to about 5 hours, most preferably from about 1 to about 3 hours.

Any suitable organic compounds in combination with titanium tetrachloride can be employed as the extraction/activation liquid. The currently preferred organic compounds are hydrocarbons. Some typical examples include heptane, pentane, 2,3-dimethylpentane, hexane, benzene, toluene, xylene, and ethyl benzene. It is currently preferred to use a combination of aromatic and paraffinic hydrocarbons, for example, heptane and toluene. The results obtained will vary depending on the specific extraction/activation liquid employed. For the preferred heptane/toluene/titanium tetrachloride mixture, the heptane would generally account for about 50 to 70 weight percent of the liquid, more preferably, the heptane would account for about 54 to about 62 weight percent of the liquid, the toluene would generally account for about 30 to 50 weight percent of the liquid, more preferably the toluene would account for about 34 to 42 weight percent of the liquid, and the titanium tetrachloride would account for about 1 to about 20 weight percent of the liquid, more preferably about 1 to 10 weight percent.

It is currently preferred that after the extraction/activation is conducted that the solid component be separated from the liquid component. This subsequently attained solid component should then again be subjected to an extraction/activation step similar to the previous extraction/activation step. Further examples of various methods to extract/activate the components are disclosed in U.S. patent 4,680,351. A preferred method of preparing the catalyst is disclosed in Example I of this specification.

COCATALYSTS

The catalyst system produced by the foregoing methods disclosed above and in the references cited, and as illustrated in Example I, are preferably used in conjunction with a cocatalyst of an organometallic compound. The organometallic compound cocatalyst is selected from the group consisting of trialkylaluminums. For example, preferred cocatalysts are triethylaluminum, trimethylaluminum, and triisobutylaluminum. The molar ratio of organometallic cocatalyst to titanium-containing catalyst component employed can vary but may range up to about 400 to 1. However, close attention should be paid to the aluminum/titanium mole ratios, in the final total catalyst/cocatalyst package, because certain mole ratios of these components are preferred over other mole ratios when considering productivity and the weight percent of solubles in the reactor. The term "solubles" is defined in this specification as the amount of soluble polymer left in the monomer, comonomer and/or diluent. The weight percent of solubles is based on the total polymer weight both soluble and insoluble (See Example VIII).

POLYMERIZATION CONDITIONS

The olefins which can be polymerized using this process are those olefins which have a methyl branch at the 3-position. Furthermore, these alpha-olefins should have between about 5 and 21 carbon atoms in the molecule inclusive. Examples of such olefins are 3-methyl-1-butene, 3-methyl-1-pentene, 3-methyl-1-hexene, 3-methyl-1-heptene, 3-methyl-1-octene, 3-methyl-1-nonene and 3-methyl-1-decene. Additionally, it is within the scope of this invention that these monomers can be copolymerized with other alpha-olefins (also called comonomers) such as, for example, ethylene, propylene, 1-hexene, 4-methyl-1-pentene, 3-ethyl-1-hexene, 1-octene, 1-decene, and 1-hexadecene. When adding the comonomer to reaction it is preferred that the comonomer be added incrementally or continuously through the polymerization reaction. Incremental or continuous addition of the comonomer is preferred because a higher molecular weight copolymer resin is obtained and less reaction solubles are produced. Incremental addition means that the amount of comonomer to be added to the reactor, is divided up into discrete individual releases in the reactor. For example, if ten mole percent of comonomer (based on total moles of monomer and comonomer) is to be added to a reactor during the next hour, one mole percent of comonomer could be added every 6 minutes, instead of dumping all of the comonomer in at the start of the copolymerization. Continuous addition means that monomer is added through all, or essentially all, of the polymerization period. This addition can be uniform through the addition or its rate can be increased or decreased during the polymerization.

The preferred reactor temperature for polymerizing these monomers is in the range of 60°C to 120°C. Preferably it is in the range of 85°C to 115°C and most preferably from about 90°C to 110°C. Temperatures higher than 120°C usually result in catalyst degradation to the point that polymerization results in significantly reduced yield and temperatures below 60°C tend to result in productivities which are not commercially viable for these types of monomers. The reactor residence time of the catalyst varies. Usually, however, it is in the range of about 0.1 hours to about 4 hours. Most preferably it is in the range of about 0.25 hours to about 2 hours and most preferably it is in the range of about 0.5 hours to about 1.5 hours. Additionally, hydrogen can be charged to the reactor in order to facilitate the polymerization. However, it should be noted that higher levels of hydrogen after a certain point tend not to significantly effect the productivity of the polymerization reaction. It should also be noted, however, that this hydrogen effect seems related to the particular type of monomer used in the polymerization. Therefore, some leeway and experimentation should be done in order to determine the optimum hydrogen concentration when considering the various production variables (see Example VI). The production of poly(3-methyl-1-butene) suggests that the aluminum/titanium mole ratio should also be regulated. The data indicate that an aluminum/titanium mole ratio between about 10 to about 60 is best. Preferably, however, this ratio is between about 15 to about 55 and most preferably it is between 25 to 50, for the polymerization of 3-methyl-1-butene.

Examples

These examples are provided to further assist a person skilled in the art with understanding this invention. The particular reactants, conditions, and the like, are intended to be generally illustrative of this invention and are not meant to be construed as unduly limiting the reasonable scope of this invention. Examples I-IX illustrate the polymerization process and the variety of different settings. Example X describes the benefit of copolymerization in a variety of ways.

Example I: Preparation of a Typical Catalyst Used in This Invention

This example illustrates a preferred method of making the catalyst. This method is similar to those methods disclosed in U.S. Patents 4,555,496 and 4,680,351 which are hereby incorporated by reference.

The components of the catalyst were comminuted in a nitrogen purged 250 liter ball mill. To this ball mill was added:

[1] 130.0 pounds of anhydrous magnesium chloride ($MgCl_2$);

[2] 24.5 pounds of aluminum chloride ($AlCl_3$).

The temperature of the ball mill was then brought to a temperature in the range of 30°C to 34°C. The contents of the ball mill were then ball milled for 16 hours. During this ball milling and in all subsequent ball millings the temperature was maintained between 30°C and 34°C. To the ball mill was then added:

[3] 41.4 pounds of ethyl benzoate ($C_6H_5CO_2C_2H_5$).

The ethyl benzoate was slowly added over a period of 1 hour while the ball mill was milling. After the addition of ethyl benzoate was completed the ball mill was allowed to mill an additional 2 hours. To the ball mill was then added:

[4] 24.8 pounds of methoxybenzene ($C_6H_5OCH_3$).

The methoxybenzene was slowly added over a period of 0.5 hours while the ball mill was milling. After the addition of the methoxybenzene was completed the ball mill was allowed to mill an additional 2.5 hours. To the ball mill was then added:

[5] 17.7 pounds of titanium tetrachloride ($TiCl_4$).

The titanium tetrachloride was slowly added over a period of 0.5 hours while the ball mill was milling. After the addition of the titanium tetrachloride was completed the ball mill was allowed to mill an additional 16 hours. The resulting solid was then recovered from the ball mill and screened to remove +20 mesh course material. A portion of the finer resulting material obtained after the screening was subjected to the following double activation/extraction process. To a 20 gallon glass jacketed stainless steel reactor equipped with a 200 rpm agitator the following was added:

[1] 26.0 pounds of the screened material;

[2] 46.8 pounds of heptane ($CH_3(CH_2)_5CH_3$);

[3] 31.2 pounds of toluene ($C_6H_5CH_3$);

[4] 4.2 pounds of titanium tetrachloride.

The reactor was then heated to a temperature between 95°C and 100°C. This temperature was maintained for 2 hours. During these beating steps the reactor was constantly agitated. The resulting mixture was then immediately filtered to recover the solid material. To the reactor was then added:

[5] the filtered solid material;
[6] 46.8 pounds of heptane;
[7] 31.2 pounds of toluene;
[8] 4.2 pounds of titanium tetrachloride.

The reactor was then heated to a temperature between 95°C and 100°C. This temperature was maintained for 2 hours. During these heating steps the reactor was constantly agitated. The resulting mixture was then immediately filtered to recover the solid material. To the reactor was then added:

[9] the solid material;
[10] 26.0 pounds of heptane.

The reactor was then agitated for 0.25 hours. After the agitation was complete the resulting mixture was filtered to recover the solid material. To this solid material was added:

[11] 26.0 pounds of heptane.

The resulting slurry was then collected as the catalyst used in the following inventive examples.

Example II: Initial Catalyst Survey

In this example a variety of transition metal catalysts were evaluated at reaction temperatures between 60°C and 120°C in a series of 4 hour runs. A total of 8 different catalysts were used in this initial survey. These catalysts are described in Table IIA.

Table IIA

| Catalyst | Weight Percent of Metal Components[a,c] | | | Comments[b] |
|---|---|---|---|---|
| | Ti | Mg | Al | |
| A | 2.2 | 20.9 | .68 | Catalyst used in this invention |
| B | 1.7 | 18.3 | - | |
| C | 15.5 | - | - | Titanium trichloride with 50 wt% polypropylene prepolymer |
| D | 21.8 | - | - | Titanium Chloride with 30 wt% stereoregulator |
| E | 31.1 | - | - | Titanium trichloride |
| F | 0.4 | 3.9 | - | Catalyst with 80 wt% polypropylene prepolymer |
| G | 2.0 | 19.5 | - | Same catalyst as F without the prepolymer |
| H | 24.1 | - | 4.5 | |

[a]"-" indicates zero or a trace amount.
[b]Catalysts B through H are catalysts known for their polymerization ability with propylene.
[c]The weight percents were determined by Plasma analysis.

A reactor residence time of 4 hours was used in all runs. This time was selected on the basis of early work which suggested that longer residence times are necessary in order to optimize polymer yield. It has since been discovered that shorter residence times are adequate for some of the catalysts surveyed. Triethylaluminum was used as the cocatalyst for this study. Regardless of catalyst charge, the same amount of triethylaluminum (TEA) (4.63mmol, 5.0 mL of a 15 wt% solution in heptane) was used in each run. This lead to the broad disparity in the aluminum/titanium ratios shown in Table IIB below.

All of the polymerizations were performed in a one gallon, stainless steel Autoclave Engineers reactor. Under a purge of nitrogen, the reactor was charged with the selected catalyst, 5.0 milliliters of triethylaluminum solution, and then sealed. 3-Methyl-1-butene was drained into the reactor from a 2.0 liter reservoir followed by a pressure drop of 25 psig from a 300 milliliter cylinder of hydrogen. The reactor was then heated to the desired temperature and held there for 4 hours. After this time, a mixture of acetylacetone and propylene oxide were added to deactivate the catalyst. Unreacted monomer was then drained from the bottom of the reactor into a grounded aluminum pan. The polymer was then washed with 2 liters of n-heptane at 80 °C for 30 minutes, then removed from the reactor, and dried in an aluminum pan at 75 °C for 2 hours.

Table IIB

| Run | Catalyst | Al/Ti Ratio | Reactor Temp (°C) | Catalyst Charge (g) | Polymer Yield | Reactor (g) | Solubles (%) | Productivity (g/g) | Calculated Titanium Content in Polymer (in ppm by weight)* |
|---|---|---|---|---|---|---|---|---|---|
| 1 | A | 66.3 | 60 | 0.1521 | 108.68 | 9.93 | 8.4 | 780 | 31 |
| 2 | A | 54.2 | 80 | 0.1860 | 188.11 | 13.02 | 6.5 | 1081 | 22 |
| 3 | A | 63.3 | 100 | 0.1593 | 201.70 | 17.39 | 7.9 | 1375 | 17 |
| 4 | A | 59.3 | 120 | 0.1701 | 145.57 | 18.01 | 11.0 | 962 | 26 |
| 5 | B | 79.5 | 60 | 0.1640 | 58.58 | 16.49 | 22.0 | 458 | 48 |
| 6 | B | 66.3 | 80 | 0.1968 | 95.49 | 8.91 | 8.5 | 530 | 35 |
| 7 | B | 76.7 | 100 | 0.1700 | 94.18 | 11.38 | 10.8 | 621 | 31 |
| 8 | B | 74.5 | 120 | 0.1752 | 30.89 | 12.16 | 28.2 | 246 | 96 |
| 9 | C | 2.8 | 60 | 0.5157 | 31.09 | 3.81 | 10.9 | 135 (1) | 2571 |
| 10 | C | 3.2 | 80 | 0.4462 | 30.98 | 2.93 | 8.6 | 152 (1) | 2232 |
| 11 | C | 2.3 | 100 | 0.6258 | 66.04 | 5.74 | 8.0 | 229 (1) | 1469 |
| 12 | C | 2.5 | 120 | 0.5776 | 55.57 | 5.58 | 9.1 | 212 (1) | 1611 |
| 13 | D | 1.9 | 60 | 0.5517 | 93.68 | 6.21 | 6.2 | 259 (2) | 1284 |
| 14 | D | 1.9 | 80 | 0.5293 | 122.90 | 6.83 | 5.3 | 350 (2) | 939 |
| 15 | D | 1.8 | 100 | 0.5744 | 152.36 | 8.17 | 5.1 | 400 (2) | 822 |
| 16 | D | 2.0 | 120 | 0.5219 | 100.24 | 27.67 | 21.6 | 350 (2) | 1135 |
| 17 | E | 1.5 | 60 | 0.4712 | 87.22 | 3.72 | 4.1 | 193 (3) | 1680 |
| 18 | E | 1.5 | 80 | 0.4699 | 139.59 | 6.29 | 4.3 | 310 (3) | 1047 |
| 19 | E | 1.4 | 100 | 0.5092 | 175.97 | 8.68 | 4.7 | 363 (3) | 900 |
| 20 | E | 1.3 | 120 | 0.5304 | 245.52 | 12.28 | 4.8 | 486 | 672 |
| 21 | F | 45.7 | 60 | 1.2119 | 39.31 | 6.41 | 14.0 | 189 (3) | 123 |
| 22 | F | 47.5 | 80 | 1.1666 | 79.91 | 7.82 | 8.9 | 376 (3) | 58 |
| 23 | F | 46.9 | 100 | 1.1829 | 60.16 | 10.96 | 15.4 | 301 (3) | 79 |
| 24 | F | 47.3 | 120 | 1.1716 | 41.77 | 17.04 | 29.0 | 251 (3) | 112 |

8

Table IIB (cont.)

| Run | Catalyst | Al/Ti Ratio | Reactor Temp (°C) | Catalyst Charge (g) | Polymer Yield (g) | Reactor (g) | Solubles (%) | Productivity (g/g) | Calculated Titanium Content in Polymer (in ppm by weight)[4] |
|---|---|---|---|---|---|---|---|---|---|
| 25 | G | 7.4 | 60 | 1.4892 | 222.03 | 6.04 | 2.6 | 153 | 134 |
| 26 | G | 7.2 | 80 | 1.5361 | 78.47 | 32.74 | 29.4 | 72 | 392 |
| 27 | G | 7.4 | 100 | 1.5009 | 71.92 | 20.74 | 22.4 | 62 | 417 |
| 28 | G | 8.0 | 120 | 1.3909 | 55.72 | 13.86 | 19.9 | 50 | 499 |
| 29 | H | 2.3 | 60 | 0.4673 | 10.01 | 6.25 | 38.4 | 35 | 11251 |
| 30 | H | 2.3 | 80 | 0.4720 | 21.68 | 19.71 | 47.6 | 88 | 5247 |
| 31 | H | 2.3 | 100 | 0.4702 | 35.51 | 15.78 | 30.8 | 109 | 3191 |
| 32 | H | 2.3 | 120 | 0.4743 | 37.51 | 20.36 | 35.2 | 122 | 3047 |

1. Based on 50% of catalyst weight, disregards 50 wt% prepolymer.
2. Based on 70% of catalyst weight, disregards 30 wt% stereoregulator.
3. Based on 20% of catalyst weight, disregards 80 wt% prepolymer.
4. The calculated titanium content in the polymer was calculated using the following formula:

$$\frac{\text{Catalyst Charge (in grams)} \times \text{Weight Percent of Ti in Catalyst} \times 1{,}000{,}000}{\text{Polymer Yield}}$$

This gave a result in part per million by weight. The weight percent of Ti in each catalyst is given in Table IIA. These values give the theoretical amount of Ti in each solid, unwashed, polymer sample. At these productivity levels a catalyst removal step would almost certainly be desired, therefore a polymer with a low Ti content, before catalyst removal, is highly desirable.

It is apparent from Table IIB that inventive catalyst A is by far the best catalyst of those screened for this type of polymerization. Although this productivity is much less than the catalyst productivity reported for such commercial production operations as polyethylene and polypropylene, it is still at least 2 to 4 times higher than what has previously been reported in the literature for the polymerization of 3-methyl-1-butene. Furthermore, the yield of poly(3-methyl-1-butene) with catalyst A is high enough to produce this specialty polymer in a commercially viable process.

Example III: Polymerization of 3-methyl-1-butene, 3-methyl-1-pentene and 3-ethyl-1-hexene

A further study was done to compare the productivity of various catalysts for polymerizing the above-mentioned monomers. All of the runs were performed using a procedure similar to the procedure in Example II.

Table III[3]

| Run | Catalyst Type | Monomer | Catalyst (g) | Yield (g) | Reactor-Solubles | | Productivity (g/g) |
|-----|---------------|---------|--------------|-----------|------------------|--------|--------------------|
|     |               |         |              |           | (g) | (wt.%) |          |
| 3   | A             | 3MB1    | 0.1593       | 201.70    | 17.39 | 7.9  | 1375     |
| 11  | C[1]          | 3MB1    | 0.6258       | 66.04     | 5.74  | 8.0  | 229      |
| 19  | E             | 3MB1    | 0.5092       | 175.97    | 8.68  | 4.7  | 363      |
| 33  | A1            | 3MB1    | 0.1493       | 26.70     | 30.47 | 53.3 | 383      |
| 34  | A1            | 3MP1    | 0.1641       | 15.09     | 45.46 | 75.0 | 369      |
| 35  | A2            | 3MP1    | 0.1712       | 114.06    | 23.65 | 17.1 | 804      |
| 36  | A             | 3MP1    | 0.1763       | 375.23    | 23.34 | 5.6  | 2261     |
| 37  | C[1]          | 3MP1    | 0.9947       | 63.17     | 31.39 | 33.1 | 190      |
| 38  | D[2]          | 3MP1    | 0.5081       | 89.88     | 23.10 | 20.4 | 318      |
| 39  | A             | 3EH1    | 0.3049       | 4.53      | 12.04 | 72.6 | 54       |

[1]See footnote 1 in Table IIB.
[2]See footnote 2 in Table IIB
[3]Catalyst A1 is made the same way as Catalyst A except no electron donors are added and Catalyst A1 was not subjected to a double activation/extraction. Catalyst A2 is made the same way as Catalyst A except Catalyst A2 was not subjected to a double activation/extraction. Runs 3, 11, 19, and 33 polymerized 3-methyl-1-butene (3MB1) at 100°C and 4 hour reactor residence time with 25 psig of hydrogen. Runs 34-38 polymerized 3-methyl-1-pentene (3MP1) at 100°C for 2 hour reactor residence time and 50 psig of hydrogen. Runs 39 polymerized 3-ethyl-1-hexene (3EH1) at 100°C for a 2 hour reactor residence time with 50 psig of hydrogen.

The data clearly show that catalyst A performed better than any of the other catalysts in the series. However, it is interesting to note that the polymerization of 3-ethyl-1-hexene did not perform as well. For example, comparing runs 36 with 39, it is apparent that 3-methyl-1-pentene polymerized to yield about 4200 percent more polymer than 3-ethyl-1-hexene. Upon closer inspection it is also apparent that the polymerization of 3-ethyl-1-hexene generated about 1200 percent more solubles than did the 3-methyl-1-pentene. Therefore, it can clearly be seen that while catalyst A is not particularly effective in the polymerization of 3-ethyl-1-hexene it is the catalyst of choice for polymerizing alpha-olefins which have a methyl branch at the 3-position.

Example IV: Reactor Temperature Effect on the Polymerization of 3MB1 and 3MP1 with Catalyst A

A series of runs was conducted to determine the optimum temperature at which maximum productivity is obtained. The procedure utilized to attain the data below was similar to the procedure used in Example II. The specified temperature was used for 2 hours with 50 psig of hydrogen and 5.0 milliliters of TEA solution. The data are summarized below.

Table IV

| Run | Monomer | Reactor Temp (°C) | Amount of Catalyst (g) | Polymer Yield | Reactor-Solubles | | Productivity (g/g) |
|---|---|---|---|---|---|---|---|
| | | | | | (g) | (wt%) | |
| 40 | 3MB1 | 50 | 0.2629 | 92.46 | 13.32 | 12.6 | 402 |
| 41 | 3MB1 | 60 | 0.2792 | 162.92 | 17.31 | 9.6 | 646 |
| 42 | 3MB1 | 70 | 0.2844 | 199.11 | 20.37 | 9.3 | 772 |
| 43 | 3MB1 | 80 | 0.3506 | 279.43 | 27.90 | 9.1 | 877 |
| 44 | 3MB1 | 90 | 0.3531 | 310.29 | 25.79 | 7.7 | 952 |
| 45 | 3MB1 | 100 | 0.3388 | 338.61 | 28.90 | 7.9 | 1085 |
| 46 | 3MB1 | 110 | 0.2920 | 257.75 | 28.02 | 9.8 | 979 |
| 47 | 3MB1 | 120 | 0.3031 | 228.57 | 25.13 | 9.9 | 837 |
| 48 | 3MP1 | 60 | 0.2312 | 241.80 | 32.73 | 11.9 | 1187 |
| 49 | 3MP1 | 80 | 0.1856 | 286.71 | 27.25 | 8.7 | 1692 |
| 50 | 3MP1 | 90 | 0.1536 | 297.07 | 22.45 | 7.0 | 2080 |
| 51 | 3MP1 | 95 | 0.1766 | 377.40 | 19.49 | 4.9 | 2247 |
| 52 | 3MP1 | 100 | 0.1763 | 375.23 | 23.34 | 5.9 | 2261 |
| 53 | 3MP1 | 110 | 0.1818 | 296.62 | 25.20 | 7.8 | 1770 |
| 54 | 3MP1 | 120 | 0.1562 | 204.00 | 26.65 | 11.6 | 1477 |

The data in Table IV show the effect of the reactor temperature on 3MB1 and 3MP1 polymerization. To maximize productivity, the data indicate that the reactor temperature range between 60°C and 120°C is preferred. Operating within this temperature range also minimizes the total level of solubles generated. Consequently, it it preferred to operate within these temperature ranges listed in Table IV in order to generate maximum productivity while minimizing the amount of reactor solubles.

Example V: Reactor Residence Time Effect on the Polymerization of 3MB1 and 3MP1 with Catalyst A

A series of runs was conducted to show the effect of reactor residence time on the polymerization of 3MB1 and 3MP1. The procedure utilized in this run was similar to the procedure utilized in Example II. A reactor temperature of 100°C for the specified residence time was used along with 50 psig of hydrogen for runs 63-68 and 25 psig of hydrogen for runs 55-62. The data are summarized below.

Table V

| Run | Monomer | Residence Time (hr) | Amount of Catalyst (g) | Polymer Yield | Reactor-Solubles | | Productivity (g/g) |
|-----|---------|---------------------|------------------------|---------------|------------------|-----|--------------------|
|     |         |                     |                        |               | (g) | (wt%) |                    |
| 55 | 3MB1 | 0.25 | 0.1447 | 72.15 | 9.09 | 11.2 | 561 |
| 56 | 3MB1 | 0.50 | 0.1636 | 126.73 | 13.80 | 9.8 | 859 |
| 57 | 3MB1 | 0.75 | 0.1445 | 122.80 | 12.81 | 9.5 | 938 |
| 58 | 3MB1 | 1.00 | 0.1558 | 148.63 | 15.77 | 9.6 | 1055 |
| 59 | 3MB1 | 2.00 | 0.1512 | 148.28 | 14.84 | 9.1 | 1079 |
| 60 | 3MB1 | 3.00 | 0.1683 | 176.98 | 16.22 | 8.4 | 1148 |
| 61 | 3MB1 | 4.00 | 0.1593 | 201.70 | 17.39 | 7.9 | 1375 |
| 62 | 3MB1 | 5.00 | 0.1703 | 204.53 | 14.90 | 6.8 | 1288 |
| 63 | 3MP1 | 0.25 | 0.2398 | 215.88 | 24.02 | 10.0 | 1000 |
| 64 | 3MP1 | 0.50 | 0.1597 | 259.63 | 27.65 | 9.6 | 1799 |
| 65 | 3MP1 | 1.00 | 0.1784 | 316.15 | 21.85 | 6.5 | 1895 |
| 66 | 3MP1 | 1.50 | 0.1654 | 282.78 | 20.62 | 6.8 | 1834 |
| 67 | 3MP1 | 2.00 | 0.1838 | 335.26 | 21.80 | 6.1 | 1943 |
| 68 | 3MP1 | 3.00 | 0.1811 | 380.57 | 21.43 | 5.3 | 2220 |

The data in Table V above illustrate that the productivity increases from a residence time of 0 hours (time at which the reactor reaches the desired operating temperature) to about 1 hour, after which little gain in productivity is realized. While not wanting to be bound by theory, it is believed that after about 1 hour the catalyst begins to decay which leads to only modest gains in productivity at longer residence times. Additionally, it should be noted that the amount of reactor solubles generated in this reaction tends to decrease with residence time. Therefore, it is apparent that there are competing considerations between lowering the amount of reactor solubles by increasing the reactor residence time and generating maximum economical productivity with a lower reactor residence time.

Example VI: Hydrogen Concentration Effect on the Polymerization of 3MB1 and 3MP1 with Catalyst A

A series of runs was done to illustrate the effect of the hydrogen concentration on the polymerization of 3MB1 and 3MP1. These runs were conducted using procedures similar to the procedures used in Example II. A reactor temperature of 100°C was used for a 2 hour residence time with the specified amount of hydrogen. The data are summarized below.

Table VI

| Run | Monomer | Hydrogen (psig) | Amount of Catalyst (g) | Polymer Yield | Reactor-Solubles | | Productivity (g/g) |
|---|---|---|---|---|---|---|---|
| | | | | | (g) | (wt%) | |
| 69 | 3MB1 | 0 | 0.3828 | 113.52 | 6.40 | 5.3 | 313 |
| 70 | 3MB1 | 25 | 0.4119 | 309.98 | 14.92 | 4.6 | 789 |
| 71 | 3MB1 | 50 | 0.4278 | 397.64 | 18.30 | 4.4 | 972 |
| 72 | 3MB1 | 75 | 0.4399 | 471.65 | 20.32 | 4.1 | 1118 |
| 73 | 3MB1 | 100 | 0.4217 | 491.10 | 21.77 | 4.2 | 1216 |
| 74 | 3MB1 | 150 | 0.4244 | 526.05 | 17.44 | 3.2 | 1281 |
| 75 | 3MB1 | 200 | 0.4214 | 539.97 | 17.54 | 3.2 | 1323 |
| 76 | 3MB1 | 300 | 0.3996 | 513.23 | 24.01 | 4.5 | 1344 |
| 77 | 3MB1 | 400 | 0.3938 | 509.27 | 31.02 | 5.7 | 1372 |
| 78 | 3MP1 | 0 | 0.1649 | 6.40 | 12.36 | 65.9 | 114 |
| 79 | 3MP1 | 25 | 0.2077 | 203.50 | 12.33 | 5.7 | 1039 |
| 80 | 3MP1 | 50 | 0.1833 | 307.82 | 24.94 | 7.5 | 1815 |
| 81 | 3MP1 | 100 | 0.1694 | 336.91 | 26.50 | 7.3 | 2145 |
| 82 | 3MP1 | 150 | 0.2048 | 413.88 | 25.64 | 5.8 | 2146 |
| 83 | 3MP1 | 200 | 0.1809 | 449.58 | 26.96 | 5.7 | 2634 |
| 84 | 3MP1 | 400 | 0.1805 | 497.79 | 28.74 | 5.5 | 2917 |

The data above illustrates that the productivity starts to level off after a charge of 100 psig of hydrogen. Since, in general, increased hydrogen levels result in higher flow rates, it is usually desirable to keep the hydrogen level at an amount lower than what would optimize productivity. That is, productivity is sacrificed at the expense of processing characteristics and properties.

Example VII: Cocatalyst Survey with Catalyst A

In the previous catalyst screening study (see Example II), triethylaluminum was used exclusively as the cocatalyst for polymerizing 3MB1. To determine if some other cocatalyst provided a better result with the catalyst used in this invention, a series of runs was performed varying the cocatalyst from run to run. To insure the comparisons would be meaningful, the aluminum to titanium mole ratio (Al/Ti) and all of the reactor conditions were held constant. The procedure utilized in this example was similar to the procedure utilized in Example II. A reactor temperature of 100°C and a reactor residence time of 2 hours was used. Additionally, 50 psig of hydrogen was used and the Al/Ti mole ratio was equal to about 40. The data are summarized below.

13

Table VII

| Run | Cocatalyst | Productivity (g/g) | Solubles (wt%) Reactor | Flow Rate |
|---|---|---|---|---|
| 85 | TMA | 940 | 7.5 | 95 |
| 86 | TEA | 1199 | 8.4 | 48 |
| 87 | TIBA | 983 | 5.8 | 35 |
| 88 | DEAC | 521 | 10.9 | 255 |
| 89 | EASC | 40 | 38.8 | > 1000 |
| 90 | EADC | 10 | 100.0 | - |

(1) TMA = Trimethylaluminum (2) TEA = Triethylaluminum (3) TIBA = Triisobutylaluminum (4) DEAC = Diethylaluminum chloride (5) EASC = Ethylaluminum sesquichloride (6) EADC = Ethylaluminum dichloride (7) The flow rate was measured using the procedure similar to ASTM D1238-82. This flow rate was measured at 320°C under a 5 kilogram load after a 5 minute hold period. During the hold the resin was weighted with a 360 gram load.

None of the other cocatalysts screened were any more effective than TEA for optimizing the productivity of 3MB1. All of the trialkylaluminums (runs 85-87) were effective cocatalysts. Substituting alkyl groups with chlorides (as in runs 88-90), however, resulted in progressively lower productivities and higher reactor solubles.

Example VIII: The Aluminum/Titanium Mole Ratio Effect on the Polymerization of 3MB1

A series of runs with increasing amount of TEA was used to determine the effect of the Al/Ti mole ratio on the polymerization of 3MB1. The procedure utilized was similar to the procedure utilized in Example II. A reactor temperature of 100°C for 2 hours was used. Additionally, a 50 psig hydrogen charge was utilized along with TEA as a cocatalyst.

Table VIII

| Run | Al/Ti Mole Ratio | Productivity Solubles (wt%) (g/g) Reactor | | Flow Rate |
|---|---|---|---|---|
| 91 | 1 | 0 | - | --- |
| 92 | 2.5 | 10 | 50.0 | --- |
| 93 | 3.75 | 25 | 31.7 | --- |
| 94 | 5 | 199 | 17.6 | 959 |
| 95 | 10 | 564 | 8.8 | 97 |
| 96 | 15 | 945 | 6.8 | 71 |
| 97 | 20 | 963 | 5.7 | 59 |
| 98 | 30 | 1022 | 4.9 | 47 |
| 99 | 40 | 1061 | 6.2 | 48 |
| 100 | 50 | 1076 | 6.9 | 83 |
| 101 | 60 | 1124 | 6.6 | 80 |

The data above show that a Al/Ti mole ratio of 15 results in near optimum results. Increasing levels of TEA do not afford significant increases in productivity, but increasing the Al/Ti mole ratio to almost 50 tended to minimize the polymer flow rate. Furthermore, an Al/Ti mole ratio of 30 appears to be optimum for minimizing the amount of reactor solubles. Consequently, it is clear to see that the Al/Ti mole ratio should preferably be between about 10 to about 60.

Example IX: The Effect of a TEA/DEAC Cocatalyst Mixture on the Polymerization of 3MB1

In the polymerization of propylene with certain Ziegler type catalysts, a mixture of TEA and DEAC as a cocatalyst system has been shown to result in enhanced productivity at a specific composition of the cocatalyst mixture. To determine if such an effect might occur in the polymerization of 3MB1 with the catalyst used in this invention, a series of runs was performed in which the composition of the TEA/DEAC cocatalyst mixture was constantly changed. The procedure utilized in this example was similar to the procedure utilized in Example II. A reactor temperature of 100°C for 2 hours was utilized. Additionally, 50 psig of hydrogen was included and the Al/Ti mole ratio was held constant at about 40. The data are summarized below.

Table IX

| Run | % DEAC | Productivity (g/g) | Solubles (wt%) Reactor | Flow Rate |
|---|---|---|---|---|
| 102 | 0 | 1199 | 8.4 | 73 |
| 103 | 10 | 1175 | 8.7 | 74 |
| 104 | 20 | 1076 | 7.8 | 109 |
| 105 | 30 | 1054 | 8.4 | 137 |
| 106 | 40 | 1036 | 8.3 | 133 |
| 107 | 50 | 973 | 8.3 | 182 |
| 108 | 60 | 994 | 7.4 | 138 |
| 109 | 70 | 884 | 7.5 | 146 |
| 110 | 80 | 751 | 9.0 | 177 |
| 111 | 90 | 536 | 7.4 | 233 |
| 112 | 100 | 521 | 10.9 | 300 |

As shown in the data above, enhanced productivity was not observed. Productivity dropped as the percent composition of DEAC in the cocatalyst mixture was increased. An opposite effect was observed in the flow rate. Therefore, the effect observed in propylene type polymerizations was not observed in the polymerization of 3-methyl-1-butene.

Example X: Copolymerization with 3-methyl-1-butene

A series of runs were conducted to determine the productivity of this catalyst with 3-methyl-1-butene and a comonomer. The procedure utilized, in this example, was similar to the procedure utilized in Example II. A reactor temperature of 100°C for two hours was used. Additionally, a 50 psig hydrogen charge was utilized along with 5.0 milliliters of TEA as a cocatalyst. The data are summarized below.

Table X

| Run | Comonomer[1] | Mol % Comonomer | | Productivity (g/g) |
|---|---|---|---|---|
| | | Charged | Found[2] | |
| 113 | None | 0.00 | 0.00 | 969 |
| 114 | 1-Hexene | 0.25 | 0.46 | 1064 |
| 115 | 1-Hexene | 0.50 | 0.96 | 990 |
| 116 | 1-Hexene | 1.00 | 2.06 | 1020 |
| 117 | 1-Hexene | 2.50 | 4.36 | 1097 |
| 118 | 1-Hexene | 5.00 | 7.82 | 1170 |
| 119 | 1-Decene | 0.25 | 0.44 | 1007 |
| 120 | 1-Decene | 0.50 | 0.46 | 1011 |
| 121 | 1-Decene | 1.00 | 1.23 | 989 |
| 122 | 1-Decene | 2.50 | 3.09 | 1026 |
| 123 | 1-Decene | 5.00 | 4.17 | 1251 |
| 124 | 1-Hexadecene | 0.25 | 0.22 | 1085 |
| 125 | 1-Hexadecene | 0.50 | 0.45 | 1036 |
| 126 | 1-Hexadecene | 1.00 | 0.79 | 967 |
| 127 | 1-Hexadecene | 2.50 | 1.37 | 1314 |
| 128 | 1-Hexadecene | 5.00 | 3.19 | 1560 |

[1]Comonomer added in quarter additions at T = 0,30,60, and 90 minutes.
[2]Determined by infrared analysis.

As can be seen from the above data, various comonomers can be copolymerized with 3-methyl-1-butene at high productivities, (i.e., > 700 g/g). The above data was analyzed to determine if there was a correlation between the amount of comonomer charged to the reactor and the amount of comonomers incorporated in the resulting resin. The results are presented below.

Table X-A

| Analysis of 1-Hexene Data | | | |
|---|---|---|---|
| Run Number | Comonomer Charge (Mole Percent) | Comonomer Incorporation (Mole Percent) | |
| | | Actual | Calculated |
| 113 | 0.00 | 0.00 | 0.00 |
| 114 | 0.25 | 0.46 | 0.51 |
| 115 | 0.50 | 0.96 | 1.01 |
| 116 | 1.00 | 2.06 | 2.02 |

The calculated mole percents come from the linear equation indicated by the data. Using the mole percent charge as the x-coordinate and using the actual mole percent as the y-coordinate, a linear equation in the form of $y = mx + b$ was deduced. (m is equal to the slope of the line and b is equal to the y-intercept, which in all cases is zero because without a comonomer charge no comonomer can be incorporated). This linear equation was $y = 2.02x$. The correlation of this line was 0.9988, where a correlation of plus or minus 1.00 is considered a perfect correlation. Consequently, the amount of comonomer charged to the reactor is a good predictor of the amount of comonomer incorporated for 1-hexene.

A similar analysis was done on 1-decene. The results are presented below.

Table X-B

| Analysis of 1-Decene Data | | | |
|---|---|---|---|
| Run Number | Comonomer Charge (Mole Percent) | Comonomer Incorporation (Mole Percent) | |
| | | Actual | Calculated |
| 113 | 0.00 | 0.00 | 0.00 |
| 119 | 0.25 | 0.44 | 0.30 |
| 120 | 0.50 | 0.46 | 0.61 |
| 121 | 1.00 | 1.23 | 1.20 |

The equation of the line that generated the calculated data was $y = 1.20x$. The correlation of this line was 0.9747. Consequently, the amount of comonomer charged to the reactor is a good predictor of the amount of comonomer incorporated, for 1-decene.

A similar analysis was done on 1-hexadecene. The results are presented below.

Table X-C

| Analysis of 1-Hexadecene Data | | | |
|---|---|---|---|
| Run Number | Comonomer Charge (Mole Percent) | Comonomer Incorporation (Mole Percent) | |
| | | Actual | Calculated |
| 113 | 0.00 | 0.00 | 0.00 |
| 124 | 0.25 | 0.22 | 0.20 |
| 125 | 0.50 | 0.45 | 0.41 |
| 126 | 1.00 | 0.79 | 0.82 |

The equation of the line that generated the calculated data was $y = 0.82x$. The correlation of this line was 0.9960. Consequently, the amount of comonomer charged to the reactor is a good predictor of the amount of comonomer incorporated, for 1-hexadecene.

Using procedures similar to those used to calculate the data in Tables X-A through X-C, different methods of comonomer addition were compared. The polymerizations were conducted in a manner similar to the polymerization procedure in Example II. A reactor temperature of 100°C for two hours was used. Additionally, a 50 psig hydrogen charge was utilized along with 5.0 milliliters of TEA as a cocatalyst. The results are summarized below.

| Run Number | Comonomer Added | Amount Added | Method Added[1] | Amount incorporated[2] | Weight of Solubles | Flow Rate[3] | Activity (g/g) |
|---|---|---|---|---|---|---|---|
| 129 | 1-decene | 0.40 | A | 0.88 | 9.1 | 114 | 817 |
| 130 | 1-decene | 0.60 | A | 1.32 | 12.0 | 90 | 831 |
| 131 | 1-decene | 0.60 | C | 0.77 | 9.5 | 68 | 1026 |
| 132 | 1-decene | 1.00 | C | 1.28 | 8.3 | 65 | 1019 |
| 133 | 1-hexadecene | 0.20 | A | 0.30 | - | 91 | 1191 |
| 134 | 1-hexadecene | 0.40 | A | 0.60 | - | 330 | 1168 |
| 135 | 1-hexadecene | 0.20 | B | 0.23 | 9.4 | 43 | 1089 |
| 136 | 1-hexadecene | 0.60 | C | 0.52 | 10.8 | 39 | 992 |

[1]Method A was adding all of the comonomer to the reactor before heat was added to the system. Method B was quarter additions of the comonomer at Time = 0,15,30, and 45 minutes. Method C was quarter additions at Time = 0,30,60, and 90 minutes.

[2]Amount incorporated was calculated using linear analysis techniques similar to those in Table X-A through X-C.

[3]See Note 7, Table VII

It is apparent that changing the method of comonomer addition from a batch method (method A) to a incremental method (methods B&C) lowers the flow rate indicating an increased molecular weight. (Compare runs 131 vs. 129, 132 vs. 130, 135 vs. 133, 136 vs. 134.) It is further suggested that as the comonomer addition becomes more continuous a further lowering of the flow rate can be expected. Furthermore, another benefit is the lowering of the amount of solubles which can significantly affect the economics of a polymerization process.

**Claims**

1. A process for producing a copolymer at a productivity level of at least 700 grams of copolymer per gram of catalyst utilized characterized by subjecting to polymerization:
   (A) at least one trialkylaluminum cocatalyst;
   (B) at least one alpha-olefin which has a methyl branch at the 3-position and which has at least five carbon atoms; and at least one comonomer; and
   (C) a catalyst prepared by comminuting
      (a) at least one aluminum halide
      (b) at least one electron donor
      (c) at least one metal compound wherein the metal is selected from chromium, hafnium, molybdenum, niobium, tantalum, titanium, tungsten, vanadium, zirconium, and mixtures thereof, and
      (d) a salt compound wherein at least one component of said salt compound is selected from barium, beryllium, calcium, magnesium, strontium, zinc, and mixtures thereof
   to produce a comminuted solid and then subjecting said comminuted solid to a double activation-extraction step.

2. The process of claim 1 wherein said polymerization comprises a temperature from 60 to 120°C, a reactor residence time from 0.1 to 4 hours, and the addition of hydrogen.

3. The process of claim 2 wherein said polymerization comprises a temperature from 90 to 110°C, a reactor residence time from 0.25 to 3 hours, the addition of hydrogen, and an aluminum/titanium mole ratio from 10 to 60.

4. The process of any of claims 1 - 3 wherein said comonomer is added incrementally during said reactor residence time.

5. The process of any of claims 1 - 3 wherein said comonomer is added continuously during said rector residence time.

6. The process of any of the preceding claims wherein said aluminum halide is an aluminum chloride, in particular aluminum trichloride.

7. The process of any of the preceding claims wherein said electron donor is selected from ethylbenzoate, methoxybenzene and mixtures thereof.

8. The process of any of the preceding claims wherein said metal in said metal compound is titanium.

9. The process of claim 8 wherein said titanium compound is titanium tetrachloride.

10. The process of any of the preceding claims wherein said salt compound comprises magnesium.

11. The process of claim 10 wherein said magnesium salt is magnesium dichloride.

12. The process of any of the preceding claims wherein said trialkylaluminum cocatalyst is selected from trimethylaluminum, triethylaluminum, triisobutylaluminum and mixtures thereof.

13. The process of any of the preceding claims wherein said alpha-olefin is selected from 3-methyl-1-butene, 3-methyl-1-pentene and mixtures thereof.

**14.** The process of claim 1, characterized by subjecting to polymerization

(A) a trialkylaluminum cocatalyst selected from trimethylaluminum, triethylaluminum, triisobutylaluminum, and mixtures thereof;

(B) a monomer selected from 3-methyl-1-butene and 3-methyl-pentene; and at least one comonomer; and

(C) a catalyst prepared by comminuting

(a) aluminumtrichloride

(b) an electron donor selected from ethylbenzoate, methoxybenzene, and mixtures thereof

(c) titanium tetrachloride, and

(d) magnesium chloride

to produce a comminuted solid and then subjecting said comminuted solid to a double activation-extraction step.

## DOCUMENTS CONSIDERED TO BE RELEVANT

| Category | Citation of document with indication, where appropriate, of relevant passages | Relevant to claim | CLASSIFICATION OF THE APPLICATION (Int. Cl.5) |
|---|---|---|---|
| P,X | EP-A-0 526 810 (PHILLIPS PETROLEUM COMPANY) <br> * claims 1-12 * <br> * page 5, line 46 - line 49 * <br> --- | 1-3,6-13 | C08F210/14 <br> C08F4/655 |
| D,A | US-A-4 680 351 (PHILLIPS PETROLEUM COMPANY) <br> * the whole document * <br> ----- | 1 | |
| | | | **TECHNICAL FIELDS SEARCHED (Int. Cl.5)** |
| | | | C08F |

The present search report has been drawn up for all claims

| Place of search | Date of completion of the search | Examiner |
|---|---|---|
| THE HAGUE | 23 JUNE 1993 | FISCHER B.R. |

EPO FORM 1503 03.82 (P0401)